# EUROPEAN PATENT SPECIFICATION

(11) **EP 4 326 586 B1**
(45) Date of publication and mention of the grant of the patent: **19.02.2025**
(21) Application number: 22722255.1
(22) Date of filing: 12.04.2022
(51) Int. Cl.: B60T 17/22, B60T 17/00

(54) **A METHOD AND A DEVICE FOR ESTIMATING RESIDUAL TORQUE BETWEEN THE BRAKED AND BRAKING ELEMENTS OF A VEHICLE**
VERFAHREN UND GERÄT FÜR DIE ABSCHÄTZUNG DES RESTDREHMOMENT ZWISCHEN GEBREMSTEM UND BREMSELEMENTE EINES FAHRZEUGS
PROCÉDÉ ET APPAREIL POUR ESTIMER LE COUPLE RÉSIDUEL ENTRE ÉLÉMENT FREINÉ ET FREINANT DÛN VÉHICULE

(30) Priority: 25.05.2021 IT 202100013529
(43) Date of publication of application: 28.02.2024
(73) Proprietor: ITT Italia S.r.l., 20020 Lainate (IT)
(72) Inventor: MACCHI, Pietro Roberto, 10151 Torino (IT); VIGNOLO, Umberto, 10060 Porte (Torino) (IT); TERRANOVA, Marco, 10149 Torino (IT); SERRA, Stefano, 12037 Saluzzo (Cuneo) (IT)
(74) Representative: Rapisardi, Mariacristina
(86) International application number: PCT/EP2022/059702
(87) International publication number: WO 2022/248114

(56) References cited:
- EP-A1- 0 173 687
- EP-B1- 1 173 687
- WO-A1-2018/019438
- WO-A1-2018/019438
- US-A1- 2019 351 889

## Description

The following invention refers to a device and a method for detecting residual braking torque in a vehicle.

### SUMMARY

As we know, residual braking torque is the braking torque, with relatively small values, witnessed in a vehicle due to the unintended interaction between the brake pad and the disc while the vehicle is not actually braking.

This condition, which is very common, is caused by abnormal operation of the brake caliper, which maintains a residual contact between the disc and the pad after braking.

The persistence of this contact condition, although small, maintains a nearly constant residual braking torque that has a considerable effect on fuel consumption and brake pad wear over the long term.

The new EU6 715/2007/EC standards on CO₂ emissions establish significantly more stringent limits on emissions, forcing vehicle manufacturers to seek innovative solutions in order to reduce them.

In this scenario, it is increasingly important to check for any suboptimal performance of the braking system and to limit and prevent any increase in residual braking torque, so as to reduce fuel consumption, and thus, the resulting emissions of the vehicle.

To date, there are very few systems for measuring residual braking torque.

This type of measurement can usually be performed in the laboratory on a dynamometric test bench, which is what is normally used to test and evaluate braking torque during the development of braking systems.

Equivalent on-board systems for vehicles are shown in WO2018019438A1, owned by this applicant.

Sensors for measuring caliper clearance are commercially available for heavy vehicle applications.

These sensors, however, only measure the total clearance of the entire caliper, i.e., the sum of the clearance of the two brake pads and their distance from the disc.

These known sensors, which are only available for truck applications, are unable to distinguish between the two brake pads, only measure geometric distances, and do not perform an actual measurement of resistance to residual advancement.

EP 1 173 687 A1 discloses a method for estimating the residual torque between the braked and braking elements of a vehicle by the acquisition of temperature values of the braking element. The task proposed by this invention is to overcome the above-mentioned limits of known techniques.

Within this task in mind, the invention's objective is to devise a device and method that can estimate residual braking torque in a vehicle due to undesirable interactions between the brake pad and the disc, for each brake pad.

The objective of the invention is also to conceive a device and method that enable real-time estimates of residual braking torque.

The objective of the invention is also to conceive a device and method that enable estimates of residual braking torque that can detect the minimum clearance between the brake pads and the disc, so as to help reduce brake delays.

Another important objective of the invention is to devise a device and method that can estimate residual braking torque in a manner compatible with on-board installations and
applications[connecting a means of connection and a means of recording to a remotely controlled system].

This task, as well as these and other purposes, are achieved by using a method to estimate the residual torque between the braking and braked elements of a vehicle that is characterized by the following phases:
acquiring the temperature value of said braking element;
determining whether this brake is activated when the temperature value is acquired;
accepting the acquired temperature value if said brake is not activated at said acquisition time;
if the acquired temperature value is accepted, automatically calculating a reference temperature using input from an N-dimensional calculation model with an N-dimensional vector of input variables; where said N-dimensional vector of variables includes at least the acquired temperature of said braking element; where said N-dimensional calculation model is an analytical or experimental characterization of the thermal behavior of the brake;
estimating residual torque by comparing the accepted acquired temperature to the calculated reference temperature.

This invention also reveals a device for estimating the residual braking torque of a vehicle including:
a braking element that includes a braking disc;
a braking element that includes a wearable block of friction material and a back support plate for said friction material block;
at least one temperature sensor configured and positioned to detect the temperature of said back support plate;
an electronic control unit connected to said temperature sensor, with said electronic control unit implementing an N-dimensional calculation model that represents an analytical or experimental characterization of the brake's thermal behavior, with said electronic control unit being programmed to:
   acquire the temperature value of said back support plate from said temperature sensor;
   determine whether this brake is activated when the temperature value is acquired;
   accept the temperature value if said brake is not activated at said acquisition time;
   if the temperature value is accepted, then automatically calculate a temperature reference value by providing an N-dimensional vector of variables, including at least the acquired temperature of said back support plate, as input to said N-dimensional calculation model;
   estimate residual torque by comparing the accepted acquired temperature to the calculated reference temperature.

### BRIEF DESCRIPTION OF THE DRAWINGS

Various embodiments are represented in the drawings included in attachment hereto for illustrative purposes, and the scope of this illustration must not in any way be interpreted as limiting.

Various characteristics of the different embodiments being disclosed may be combined to create additional embodiments, all of which are considered part of this illustration.
Figure 1 shows a schematic diagram for a corner of the vehicle duly equipped with the components for estimating residual torque;
Figure 2A shows two time-based data acquisition strategies, Figure 2B shows a data acquisition strategy based on an activation event;
Figures 3A, 3B, and 3C illustrate the first configuration of a preferred embodiment of the residual torque estimation method;
Figures 4A, 4B, and 4C illustrate a second configuration of a preferred embodiment of the residual torque estimation method;
Figures 5A and 5B illustrate a third configuration of a preferred embodiment of the residual torque estimation method;
Figures 6A and 6B illustrate a fourth configuration of a preferred embodiment of the residual torque estimation method;
Figure 7 shows a comparative example for the estimation of residual torque.

### DETAILED DESCRIPTION OF A SELECTION OF EMBODIMENTS

The following detailed description makes reference to the attached drawings, which form part of this description.

In the drawings, similar reference numbers typically identify similar components, unless otherwise dictated by the context.

The preferred forms of execution described in the detailed description and drawings are not intended to be limiting.

The components for only one corner of the vehicle are typically illustrated, the characteristics of which should be understood as being applicable to all corners.

Other embodiments may be used and other changes may be made without deviating from the scope of the subject-matterdefined by the appended claims.

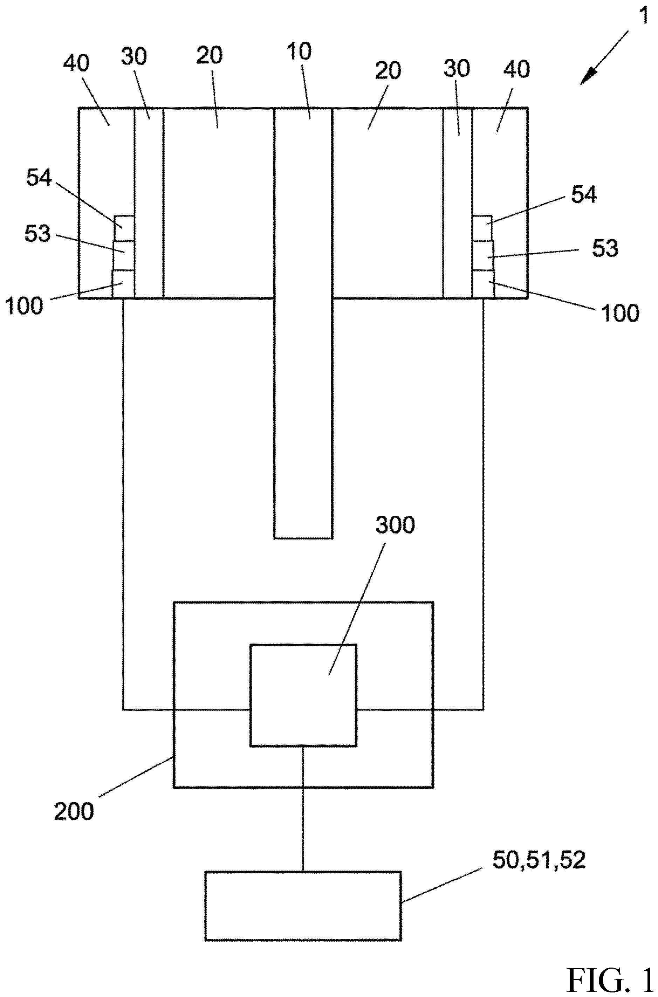

The aspects of this illustration, as described generally herein and illustrated in the figures, may be arranged, replaced, combined, separated and designed in a wide variety of different configurations, all of which are explicitly contemplated and presented in this illustration. According to this invention, as schematically illustrated in Figure 1, vehicle corner 1 is duly equipped with at least brake disc 10, wearable friction material block 20, back support plate 40, optional rear layer 30 between the wearable friction material block 20 and back support plate 40, and temperature sensor 100, configured and positioned to acquire the temperature of back support plate 40.

Temperature sensor 100 is a contact temperature sensor integrated into back support plate 40, or a non-contact temperature sensor.

Additionally, temperature sensor 100 may be configured and positioned to detect the surface temperature of back support plate 40 or the average temperature of back support plate 40.

For example, temperature sensor 100 may be positioned on the back support plate 40 surface facing wearable friction material block 20.

Temperature sensor 100 may be positioned on back support plate 40 and positioned flush with the back support plate 40 surface facing wearable friction material block 20.

If the surface temperature of back support plate 40 is to be detected, however, then this surface may be a back support plate 40 surface facing towards or away from wearable friction material block 20.

Temperature sensor 100 may be a separate component or may be silk-screened, printed directly onto the metal back support plate; different arrangements can be made by combining different types of sensors; multiple temperature sensors may be used for distributed temperature monitoring.

The braking element may be a brake pad that coordinates with a braking element represented by disc 10, as illustrated by way of example in Figure 1, or a clamping jaw that coordinates with a drum.

The device for estimating residual torque includes electronic control unit (ECU) 200, which is connected to temperature sensor 100.

The method for estimating the residual torque of a vehicle braking element according to this invention provides for temperature sensors 100 to acquire the temperature detected on back support plate 40, the generation of temperature signals and the transmission of temperature signals to electronic control unit (ECU) 200.

Advantageously, electronic control unit (ECU) 200 is also connected to and receives input signals from a number of auxiliary sensors on board the vehicle.

The auxiliary sensors include one or more sensors chosen from vehicle speed sensor 50, ambient temperature sensor 51, and brake pedal activation sensor 52.

Vehicle speed detection and the recording of ambient temperature, i.e., the temperature for the corner of the vehicle where the braking device is operating, serve to refine the algorithm's performance and resolutions.

In addition, other sensors may be incorporated into the brake pad and connected to electronic control unit (ECU) 200.

The sensors embedded in the brake pad may include one or more sensors chosen between shear strain sensor 53 and pressure force sensor 54.

Innovatively and advantageously, according to this invention, calculation algorithm 300 oversees the data collection, control and output of electronic control unit (ECU) 200.

Advantageously, the signals for the variables detected by the auxiliary sensors are used to accept the temperature value acquired by temperature sensor 100 and are also configured, together with the acquired and accepted temperature value, into an N-dimensional array input to an N-dimensional model of calculation algorithm 300.

The N-dimensional model generates a reference temperature.

The residual torque is estimated by comparing the acquired and accepted temperature to the calculated reference temperature.

The N-dimensional calculation model is an analytical or experimental characterization of the thermal behavior of the brake.

For example, the N-dimensional calculation model is represented by the brake's thermal energy storage equation, where the thermal output energy, which equals the thermal energy lost by radiation, conduction, and convection, is equal to the incoming thermal energy generated by the friction of contact between the braking and braked elements of the brake.

The reference temperature, therefore, is calculated by feeding the equation with the N-dimensional input array, which also includes a residual pressure or residual brake-through-torque value between the braking and braked elements, which are assumed to have generated the reference temperature.

To estimate the residual torque with multiple identification levels, the calculation may be repeated with different residual pressure values or residual brake-through-torque values, which will correspond to different reference temperature values.

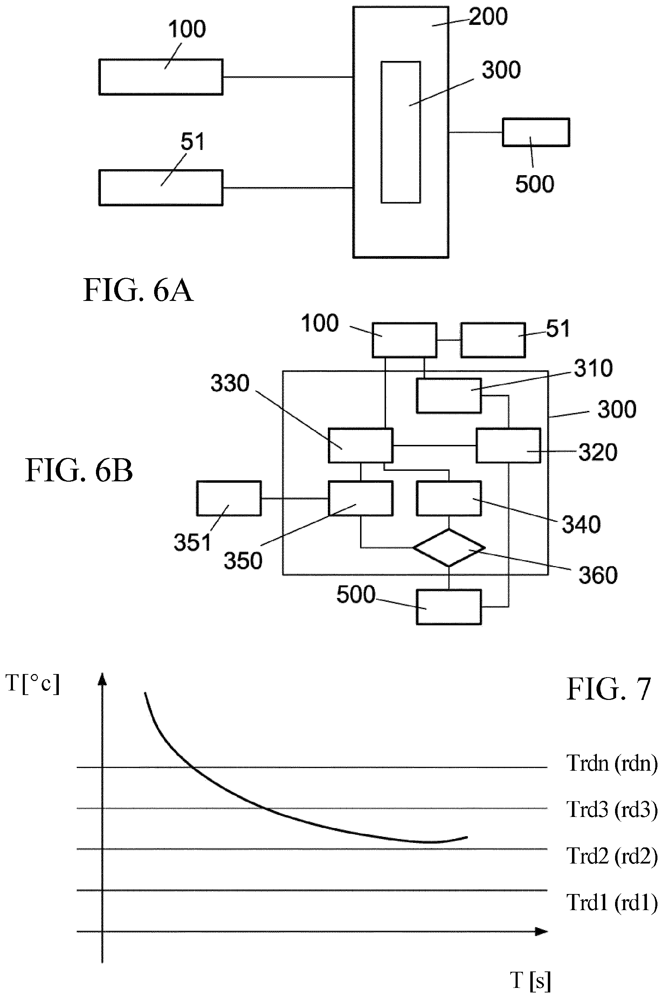

Figure 7, for example, shows the trend over time for the acquired temperature T, and various values calculated for reference temperature T_{rd1}, T_{rd2}, T_{rd3}, and T_{rdn},

Through a calibration curve, for example, each T_{rd1}, T_{rd2}, T_{rd3}, and T_{rdn} is associated with a corresponding residual torque value rd1, rd2, rd3, and rdn.

In the case being illustrated, therefore, the comparison between the acquired temperature T and the calculated reference temperature values T_{rd1}, T_{rd2}, T_{rd3}, and T_{rdn} is used to estimate the residual torque value between rd2 and rd3.

Advantageously, according to this invention, each corner of the vehicle may be equipped with one or two brake pads, with or without the sensors described above.

Advantageously, according to this invention, the residual torque calculation may be estimated by a single electronic control unit (ECU) for supervision and control, or by individual electronic control units (ECU) dedicated to each corner of the vehicle.

Advantageously, according to this invention, the residual torque calculation may be estimated in real time.

All acquisition and control algorithms are independent of vehicle type and/or braking pad and/or driving style, thanks to a self-assessment of the calibration of the signal threshold: advantageously, therefore, no tuning operations are necessary for the different applications.

The data capture may be based on two different strategies: a time-based strategy, or an event-based strategy.

Advantageously, according to this invention, the residual torque estimate is independent of the data acquisition strategy.

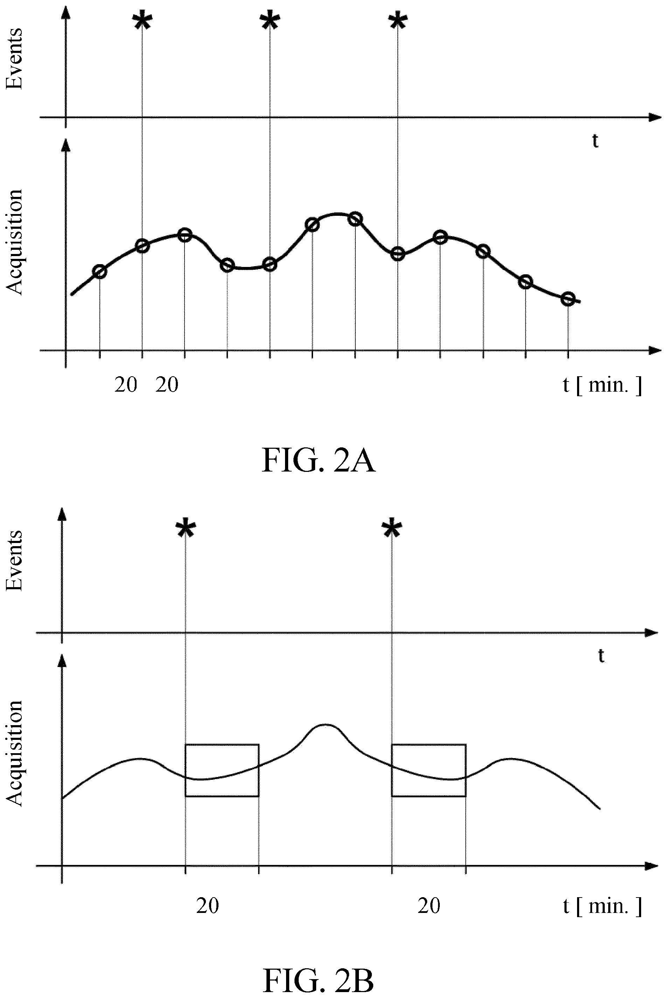

Figure 2A shows a time-based data acquisition strategy: time-based acquisition of the braking element temperature is based on a sampling frequency established over at least one time interval. The data acquisition is synchronous with preset and constant acquisition periods, typically from 20 to 60 seconds, preferably 30 seconds, during the entire operation of the vehicle.

The acquisition takes place independently of brake pedal activation; activation of the pedal is recorded.

Figure 2B illustrates a data capture strategy based on a trigger event: temporal acquisition of brake element temperature is based on continuous sampling capture logic over at least one fixed time interval from the instant of acquisition determined by the triggering of a braking event. Activating the brake pedal will trigger the acquisition of data within a subsequent time window, typically from 10 to 60 minutes, preferably 30 minutes.

The data capture within the time window happens with preset and constant acquisition periods, typically from 20 to 60 seconds, preferably 30 seconds.

Any activation of the brake pedal within an already open time window triggers a subsequent time window starting from the brake pedal activation event.

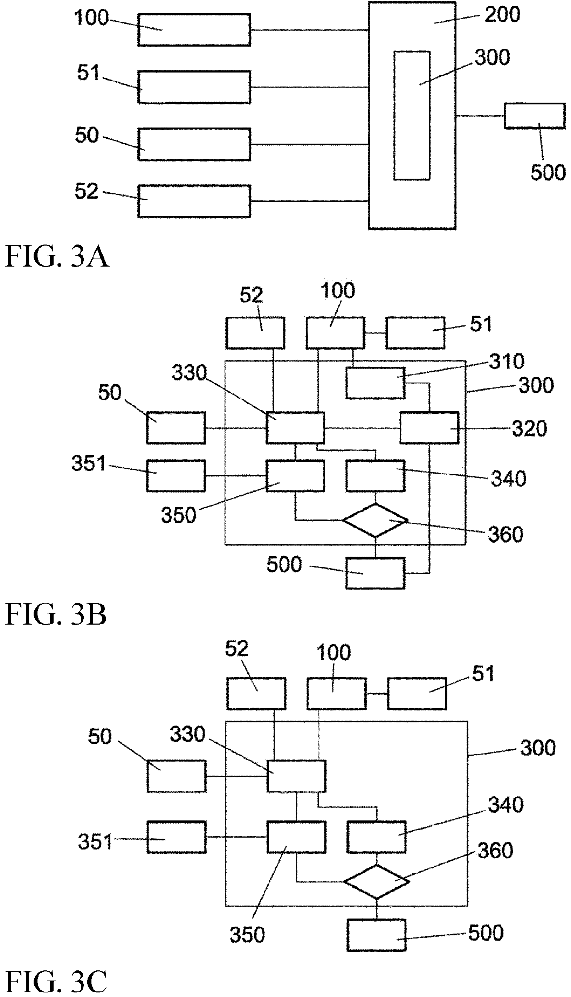

A first preferred configuration of an embodiment of the residual torque estimation method according to the present invention is illustrated in figures 3A, 3B and 3C.

Figure 3A schematically illustrates the system's architectural configuration.

The architecture includes at least one temperature sensor 100, one ambient temperature sensor 51, one speed sensor 50, one brake pedal activation sensor 52, and one electronic control unit (ECU) 200, which provides an estimate of residual torque 500 by processing the signals with algorithm 300.

Figure 3B shows the first logical flow of the residual torque estimation method.

The ambient temperature detection in the corner of the vehicle detected by ambient temperature sensor 51 is used for seasonal calibration of the temperature detected by temperature sensor 100 of back support plate 40 of the brake pad.

An initial estimate of residual torque 500 is obtained through calculation section 310, which evaluates the first derivative for the time of the detected temperature, and section 320, which processes it based on the braking status: this obtains immediate information, especially for high levels of residual torque.

Calculation section 330 performs temperature selection under non-braking conditions based on the data received from temperature sensor 100, as corrected by ambient temperature sensor 51, from the data processed by calculation section 320, as shown above, from brake pedal activation sensor signal 52, and from the speed detected by vehicle speed sensor 50.

Calculation section 330 filters the temperature that is acquired and accepted in calculation section 340 by using low-pass filters to eliminate high-frequency peaks and components.

Calculation section 330 also generates a variable flag that enables reference temperature evaluation through calculation section 350, using N-dimensional model 351 powered by an N-dimensional vector of organized brake pad temperature data detected by sensor 100, ambient temperature detected by sensor 51, vehicle speed detected by sensor 50 and the time detected relative to the braking event detected by sensor 52.

N-dimensional model 351 may alternatively be: an analytical model derived from an analytical description of the energy exchanged between the disc and the pad during braking, or an experimental model derived from a set of experimental data collected during a series of dynamic energy exchanges between disc and pad.

Calculation section 350, therefore, calculates the reference temperature by feeding, for example, the equation representing the thermal equilibrium of the brake with the N-dimensional input array, which also includes a residual pressure or residual brake-through-torque value between the braking and braked elements, which are assumed to have generated the reference temperature. Calculation section 360 receives and compares the selected temperature evaluation signals filtered by calculation section 340 and the reference temperature signal from calculation section 350 and produces and processes a signal for residual torque estimate 500.

This signal is then compared with the signal obtained from calculation section 320.

Figure 3C shows the second logical flow of the residual torque estimation method.

This second logical flow differs from the first, as described above and illustrated in Figure 3B, due to the lack of activation of calculation sections 310 and 320: the signal for residual torque estimate 500 is simply the signal obtained from calculation section 360.

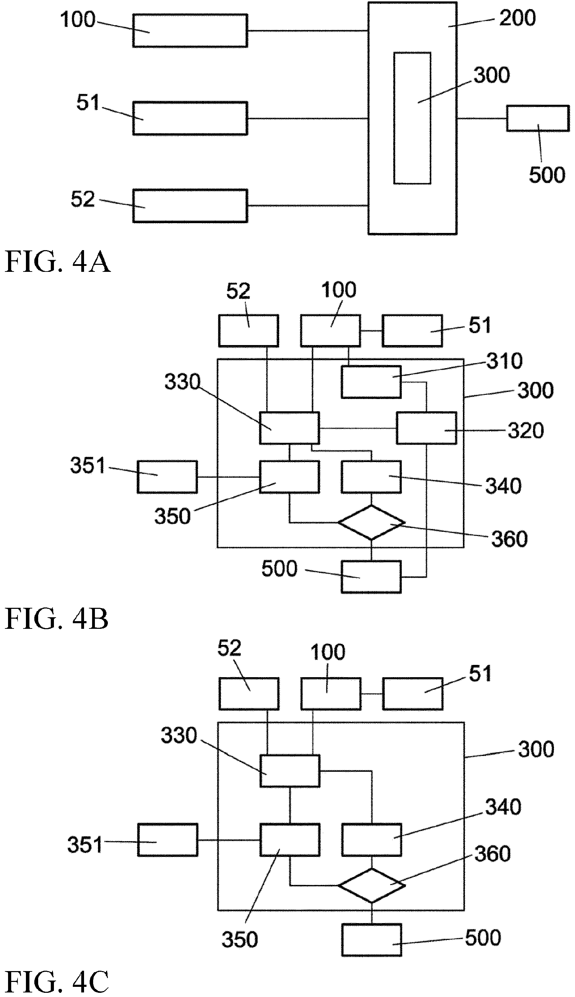

Figures 4A, 4B, and 4C show a second configuration of a preferred embodiment of the residual torque estimation method.

Figure 4A schematically illustrates the system's architectural configuration.

The architecture includes at least one temperature sensor 100, one ambient temperature sensor 51, one brake pedal activation sensor 52, and one electronic control unit (ECU) 200, which provides an estimate of residual torque 500 by processing signals through algorithm 300.

The architecture of the second configuration differs from the first configuration shown in Figure 3A due to the lack of speed data acquisition from vehicle speed sensor 50.

Figure 4B shows the first logical flow of the residual torque estimation method based on a second configuration of the preferred embodiment.

The ambient temperature detection in the corner of the vehicle detected by ambient temperature sensor 51 is used for seasonal calibration of the temperature detected by temperature sensor 100 of back support plate 40 of the brake pad.

An initial estimate of residual torque 500 is obtained through calculation section 310, which evaluates the first derivative for the time of the detected temperature, and section 320, which processes it based on the braking status: this obtains immediate information, especially for high levels of residual torque.

Calculation section 330 performs temperature selection under non-braking conditions based on the data received from temperature sensor 100, as corrected by ambient temperature sensor 51, from the data processed by calculation section 320, as shown above, from brake pedal activation sensor signal 52.

Calculation section 330 filters the temperature that is acquired and accepted in calculation section 340 by using low-pass filters to eliminate high-frequency peaks and components.

Calculation section 330 also generates a variable flag that enables reference temperature evaluation through calculation section 350, using N-dimensional model 351 powered by an N-dimensional vector of organized brake pad temperature data detected by sensor 100, ambient temperature detected by sensor 51, and the time detected relative to the braking event detected by sensor 52.

Calculation section 360 receives and compares the selected temperature evaluation signals filtered by calculation section 340 and the reference temperature signal from calculation section 350 and produces and processes a signal for residual torque estimate 500.

This signal is then compared with the signal obtained from calculation section 320.

Figure 4C shows a second logical flow of the residual torque estimation method based on a second configuration of the preferred embodiment.

This second logical flow differs from the first, as described above and illustrated in Figure 4B, due to the lack of activation of calculation sections 310 and 320: the signal for residual torque estimate 500 is simply the signal obtained from calculation section 360.

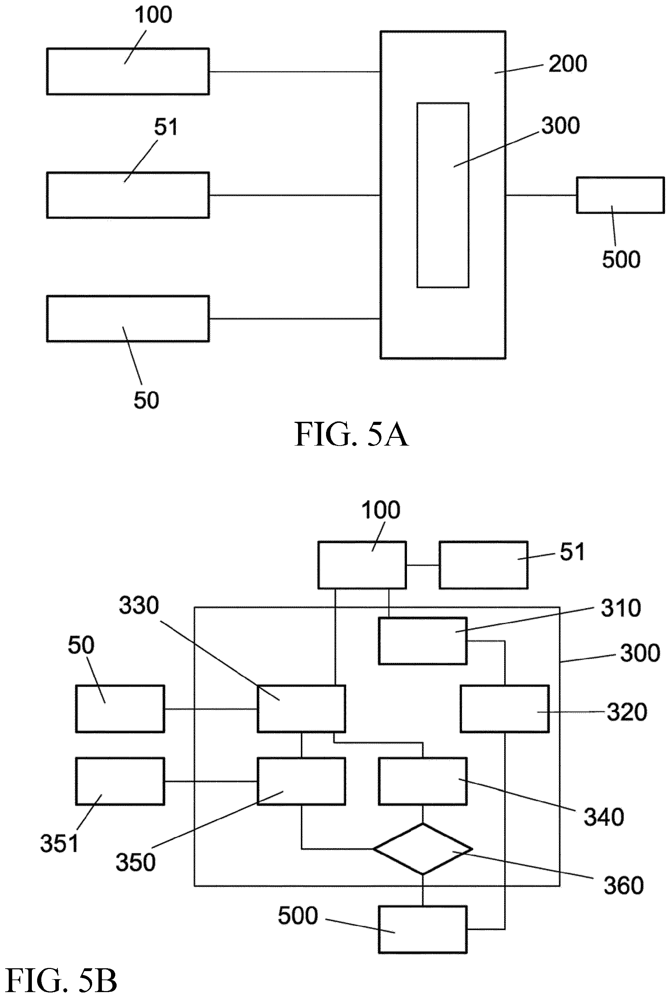

Figures 5A and 5B illustrate a third configuration of a preferred embodiment of the residual torque estimation method.

The architecture of the third configuration differs from the first configuration shown in Figure 3A due to the lack of brake pedal activation data acquisition from sensor 52.

Figure 5B shows the first logical flow of the residual torque estimation method based on a third configuration of the preferred embodiment.

The ambient temperature detection in the corner of the vehicle detected by ambient temperature sensor 51 is used for seasonal calibration of the temperature detected by temperature sensor 100 of back support plate 40 of the brake pad.

An initial estimate of residual torque 500 is obtained through calculation section 310, which evaluates the first derivative for the time of the detected temperature, and section 320, which processes it based on the braking status: this obtains immediate information, especially for high levels of residual torque.

One variant of the embodiment does not include calculation section 310.

Calculation section 330 performs temperature selection under non-braking conditions based on the data received from temperature sensor 100, as corrected by ambient temperature sensor 51, from the data processed by calculation section 320, as shown above, from the signal from vehicle speed sensor 50.

Calculation section 330 filters the temperature that is acquired and accepted in calculation section 340 by using low-pass filters to eliminate high-frequency peaks and components. Calculation section 330 also generates a variable flag that enables reference temperature evaluation through calculation section 350, using N-dimensional model 351 powered by an N-dimensional vector of organized brake pad temperature data detected by sensor 100, ambient temperature detected by sensor 51, and vehicle speed detected by sensor 50.

Calculation section 360 receives and compares the selected temperature evaluation signals filtered by calculation section 340 and the reference temperature signal from calculation section 350 and produces and processes a signal for residual torque estimate 500.

This signal is then compared with the signal obtained from calculation section 320.

Figures 6A and 6B illustrate a fourth configuration of a preferred embodiment of the residual torque estimation method.

Figure 6A schematically illustrates the system's architectural configuration.

The architecture of the fourth configuration differs from the first configuration shown in Figure 3A due to the lack of brake pedal activation data acquisition from sensor 52 and the speed data from vehicle speed sensor 51.

Figure 6B shows the logical flow of the residual torque estimation method based on a fourth configuration of the preferred embodiment.

The ambient temperature detection in the corner of the vehicle detected by ambient temperature sensor 51 is used for seasonal calibration of the temperature detected by temperature sensor 100 of back support plate 40 of the brake pad.

An initial estimate of residual torque 500 is obtained through calculation section 310, which evaluates the first derivative for the time of the detected temperature, and section 320, which processes it based on the braking status: this obtains immediate information, especially for high levels of residual torque.

One variant of the embodiment does not include calculation section 310.

Calculation section 330 performs temperature selection under non-braking conditions based on the data received from temperature sensor 100, as corrected by ambient temperature sensor 51, from the data processed by calculation section 320, as shown above.

Calculation section 330 filters the temperature that is acquired and accepted in calculation section 340 by using low-pass filters to eliminate high-frequency peaks and components.

Calculation section 330 also generates a variable flag that enables reference temperature evaluation through calculation section 350, using N-dimensional model 351 powered by an N-dimensional vector of organized brake pad temperature data detected by sensor 100, and ambient temperature detected by sensor 51.

Calculation section 360 receives and compares the selected temperature evaluation signals filtered by calculation section 340 and the reference temperature signal from calculation section 350 and produces and processes a signal for residual torque estimate 500.

This signal is then compared with the signal obtained from calculation section 320.

Other changes and variations to the method and the device for estimating the residual torque of a vehicle brake element are possible, of course.

The method for estimating the residual torque of a vehicle brake element conceived in this way is subject to numerous changes and variants, all falling within the scope of the inventive concept, as specified in the claims.

In addition, every detail can be replaced with other technically equivalent elements.

In practice, any type of materials and systems may be used to suit the needs and state of the art.

## Claims

1. Method for estimating the residual torque between the braked and braking elements of a brake of vehicle that is **characterized by** the following phases:
· acquisition of the temperature value of said braking element;
· determination of whether said brake is activated when the temperature value is acquired;
· acceptance of the acquired temperature value if said brake is not activated at said acquisition time;
· if the acquired temperature value is accepted, then a temperature reference value is automatically calculated by providing an N-dimensional vector of variables as input to said N-dimensional calculation model;
· where said N-dimensional vector of variables includes at least the acquired temperature of said braking element;
· where said N-dimensional calculation model is an analytical or experimental characterization of the thermal behavior of the brake;
· estimation of residual torque by comparing the accepted acquired temperature to the calculated reference temperature.

2. A method for estimating the residual torque between the braked and braking elements of a brake of vehicle according to claim 1, **characterized by** the fact that said N-dimensional vector of variables includes at least the speed of the vehicle.

3. A method for estimating the residual torque between the braked and braking elements of a brake of vehicle according to claim 1, **characterized by** the fact that said N-dimensional vector of variables also includes at least the ambient temperature.

4. A method for estimating the residual torque between the braked and braking elements of a brake of vehicle according to claim 1, **characterized by** the fact that said N-dimensional vector of variables also includes at least the time delay between the instant of temperature acquisition and the last instant in which the brake was activated.

5. A method for estimating the residual torque between the braked and braking elements of a brake of vehicle according to any of the previous claims, **characterized by** the fact that said braking element includes a braking disc (10), and said braking element includes a wearable block of friction material (20) and a back support plate (40) for said friction material block (20), and by the fact that the temperature of said braking element is acquired by at least one temperature sensor (100) configured and positioned to detect the temperature of said back support plate (40).

6. A method for estimating the residual torque between the braked and braking elements of a brake of vehicle according to any of the previous claims, **characterized by** the incorporation of a temporal acquisition logic for the temperature of said braking element based on a sampling frequency for at least one preset time interval.

7. A method for estimating the residual torque between the braked and braking elements of a brake of vehicle according to any of claims 1 - 5, **characterized by** the incorporation of a temporal acquisition logic for the temperature of said braking element based on continuous sampling for at least one preset time interval starting from an acquisition instant determined by an event.

8. Method for estimating the residual torque between the braked and braking elements of a brake of vehicle according to any of the previous claims, **characterized by** the fact that at least one variable chosen from vehicle speed, temperature of the braking element, temporal variation of the temperature of the braking element, or brake pedal status is used to determine whether said brake is activated at the instant of temperature value acquisition.

9. Method for estimating the residual torque between the braked and braking elements of a brake of vehicle according to any of the previous claims, **characterized by** the fact that the residual torque is estimated with said N-dimensional calculation model and, in addition, with the acquired time change in brake temperature.

10. A device for estimating the residual braking torque of a brake of a vehicle, including:
· a braked element that includes a braking disc (10),
· a braking element that includes a wearable block of friction material (20) and a back support plate (40) for said friction material block (20),
· at least one temperature sensor (100) configured and positioned to detect the temperature of said back support plate (40),
· an electronic control unit (ECU) (200) connected to said temperature sensor (100), said electronic control unit (ECU) (200) presenting an N-dimensional calculation model which represents an analytical or experimental characterization of the brake's thermal behavior, said electronic control unit (ECU) (200) being programmed to:
· acquire the temperature value of said back support plate (40) from said temperature sensor (100);
· determine whether said brake is activated when the temperature value is acquired;
· accept the temperature value if said brake is not activated at said acquisition time;
· if the temperature value is accepted, then automatically calculate a temperature reference value by providing an N-dimensional vector of variables, including at least the acquired temperature of said back support plate (40) as input to said N-dimensional calculation model;
· estimate residual torque by comparing the accepted acquired temperature to the calculated reference temperature.

11. A device for estimating the residual torque of a brake of a vehicle according to the previous claim, **characterized by** the fact that said temperature sensor (100) is a contact temperature sensor integrated into said back support plate (40).

12. A device for estimating the residual torque of a brake of a vehicle according to claim 11, **characterized by** the fact that said temperature sensor (100) is a non-contact temperature sensor.

13. A device for estimating the residual torque of a brake of a vehicle according to any of claims 10 through 12, **characterized by** the fact that said temperature sensor (100) is configured and positioned to detect the surface or internal temperature of said back support plate (40).

## Patentansprüche

1. Verfahren zur Schätzung des Restmoments zwischen den gebremsten und bremsenden Elementen einer Fahrzeugbremse, das durch die folgenden Phasen gekennzeichnet ist:
· Erfassung des Temperaturwerts des genannten Bremselements;
· Bestimmung, ob die genannte Bremse zum Zeitpunkt der Temperaturerfassung aktiviert ist;
· Annahme des erfassten Temperaturwerts, wenn die genannte Bremse zum Zeitpunkt der Erfassung nicht aktiviert ist;
· Wenn der erfasste Temperaturwert angenommen wird, automatische Berechnung eines Referenztemperaturwerts durch Bereitstellung eines N-dimensionalen Variablenvektors als Eingabe für das genannte N-dimensionale Berechnungsmodell;
· Wobei der genannte N-dimensionale Variablenvektor mindestens die erfasste Temperatur des genannten Bremselements umfasst;
· Wobei das genannte N-dimensionale Berechnungsmodell eine analytische oder experimentelle Charakterisierung des thermischen Verhaltens der Bremse ist;
· Schätzung des Restmoments durch den Vergleich der akzeptierten erfassten Temperatur mit der berechneten Referenztemperatur.

2. Ein Verfahren zur Schätzung des Restmoments zwischen den gebremsten und bremsenden Elementen einer Fahrzeugbremse gemäß Anspruch 1, **dadurch gekennzeichnet, dass** der genannte N-dimensionale Variablenvektor mindestens die Geschwindigkeit des Fahrzeugs umfasst.

3. Ein Verfahren zur Schätzung des Restmoments zwischen den gebremsten und bremsenden Elementen einer Fahrzeugbremse gemäß Anspruch 1, **dadurch gekennzeichnet, dass** der genannte N-dimensionale Variablenvektor mindestens die Umgebungstemperatur umfasst.

4. Ein Verfahren zur Schätzung des Restmoments zwischen den gebremsten und bremsenden Elementen einer Fahrzeugbremse gemäß Anspruch 1, **dadurch gekennzeichnet, dass** der genannte N-dimensionale Variablenvektor mindestens die Zeitverzögerung zwischen dem Zeitpunkt der Temperaturerfassung und dem letzten Zeitpunkt, zu dem die Bremse aktiviert wurde, umfasst.

5. Ein Verfahren zur Schätzung des Restmoments zwischen den gebremsten und bremsenden Elementen einer Fahrzeugbremse gemäß einem der vorherigen Ansprüche, **dadurch gekennzeichnet, dass** das genannte Bremselement eine Bremsscheibe (10) umfasst und das genannte gebremste Element einen Verschleißblock aus Reibmaterial (20) sowie eine hintere Trägerplatte (40) für den Reibmaterialblock (20) umfasst, und dadurch, dass die Temperatur des genannten Bremselements durch mindestens einen Temperatursensor (100) erfasst wird, der so konfiguriert und positioniert ist, dass er die Temperatur der hinteren Trägerplatte (40) erfasst.

6. Ein Verfahren zur Schätzung des Restmoments zwischen den gebremsten und bremsenden Elementen einer Fahrzeugbremse gemäß einem der vorherigen Ansprüche, **dadurch gekennzeichnet, dass** eine zeitliche Erfassungslogik für die Temperatur des genannten Bremselements auf der Grundlage einer Abtastfrequenz für mindestens ein vorgegebenes Zeitintervall integriert wird.

7. Ein Verfahren zur Schätzung des Restmoments zwischen den gebremsten und bremsenden Elementen einer Fahrzeugbremse gemäß einem der Ansprüche 1 bis 5, **dadurch gekennzeichnet, dass** eine zeitliche Erfassungslogik für die Temperatur des genannten Bremselements auf der Grundlage einer kontinuierlichen Abtastung für mindestens ein vorgegebenes Zeitintervall ab einem durch ein Ereignis bestimmten Erfassungszeitpunkt integriert wird.

8. Ein Verfahren zur Schätzung des Restmoments zwischen den gebremsten und bremsenden Elementen einer Fahrzeugbremse gemäß einem der vorherigen Ansprüche, **dadurch gekennzeichnet, dass** mindestens eine aus folgenden Variablen ausgewählt wird: Fahrzeuggeschwindigkeit, Temperatur des Bremselements, zeitliche Veränderung der Temperatur des Bremselements oder der Status des Bremspedals, um zu bestimmen, ob die genannte Bremse zum Zeitpunkt der Temperaturwerterfassung aktiviert ist.

9. Ein Verfahren zur Schätzung des Restmoments zwischen den gebremsten und bremsenden Elementen einer Fahrzeugbremse gemäß einem der vorherigen Ansprüche, **dadurch gekennzeichnet, dass** das Restmoment mit dem genannten N-dimensionalen Berechnungsmodell und zusätzlich mit der erfassten zeitlichen Änderung der Bremstemperatur geschätzt wird.

10. Eine Vorrichtung zur Schätzung des Restbremsmoments einer Fahrzeugbremse, umfassend:
· ein gebremstes Element, das eine Bremsscheibe (10) umfasst,
ein bremsendes Element, das einen Verschleißblock aus Reibmaterial (20) und eine hintere Trägerplatte (40) für den Reibmaterialblock (20) umfasst,
· mindestens einen Temperatursensor (100), der so konfiguriert und positioniert ist, dass er die Temperatur der hinteren Trägerplatte (40) erfasst,
· eine elektronische Steuereinheit (ECU) (200), die mit dem genannten Temperatursensor (100) verbunden ist, wobei die genannte elektronische Steuereinheit (ECU) (200) ein N-dimensionales Berechnungsmodell aufweist, das eine analytische oder experimentelle Charakterisierung des thermischen Verhaltens der Bremse darstellt, wobei die elektronische Steuereinheit (ECU) (200) programmiert ist, um:
· den Temperaturwert der hinteren Trägerplatte (40) vom genannten Temperatursensor (100) zu erfassen;
· zu bestimmen, ob die genannte Bremse zum Zeitpunkt der Temperaturerfassung aktiviert ist;
· den Temperaturwert zu akzeptieren, wenn die genannte Bremse zum Zeitpunkt der Erfassung nicht aktiviert ist;
· falls der Temperaturwert akzeptiert wird, einen Referenztemperaturwert automatisch zu berechnen, indem ein N-dimensionaler Variablenvektor, der mindestens die erfasste Temperatur der hinteren Trägerplatte (40) umfasst, als Eingabe für das genannte N-dimensionale Berechnungsmodell bereitgestellt wird;
· das Restmoment durch den Vergleich der akzeptierten erfassten Temperatur mit der berechneten Referenztemperatur zu schätzen.

11. Eine Vorrichtung zur Schätzung des Restmoments einer Fahrzeugbremse gemäß dem vorherigen Anspruch, **dadurch gekennzeichnet, dass** der genannte Temperatursensor (100) ein Kontakt-Temperatursensor ist, der in die genannte hintere Trägerplatte (40) integriert ist.

12. Eine Vorrichtung zur Schätzung des Restmoments einer Fahrzeugbremse gemäß Anspruch 11, **dadurch gekennzeichnet, dass** der genannte Temperatursensor (100) ein berührungsloser Temperatursensor ist.

13. Eine Vorrichtung zur Schätzung des Restmoments einer Fahrzeugbremse gemäß einem der Ansprüche 10 bis 12, **dadurch gekennzeichnet, dass** der genannte Temperatursensor (100) so konfiguriert und positioniert ist, dass er die Oberflächen- oder Innentemperatur der genannten hinteren Trägerplatte (40) erfasst.

## Revendications

1. Procédé d'estimation du couple résiduel entre les éléments freinés et les éléments de freinage d'un frein de véhicule, **caractérisé par** les phases suivantes :
· acquisition de la valeur de la température dudit élément de freinage ;
· détermination de l'activation ou non dudit frein au moment de l'acquisition de la température ;
· acceptation de la valeur de température acquise si ledit frein n'est pas activé au moment de ladite acquisition ;
· si la valeur de température acquise est acceptée, calcul automatique d'une valeur de température de référence en fournissant un vecteur de variables N-dimensionnel comme entrée au modèle de calcul N-dimensionnel ;
· où ledit vecteur de variables N-dimensionnel comprend au moins la température acquise de l'élément de freinage ;
· où ledit modèle de calcul N-dimensionnel est une caractérisation analytique ou expérimentale du comportement thermique du frein ;
· estimation du couple résiduel en comparant la température acquise acceptée à la température de référence calculée.

2. Procédé d'estimation du couple résiduel entre les éléments freinés et les éléments de freinage d'un frein de véhicule selon la revendication 1, **caractérisé en ce que** ledit vecteur de variables N-dimensionnel comprend au moins la vitesse du véhicule.

3. Procédé d'estimation du couple résiduel entre les éléments freinés et les éléments de freinage d'un frein de véhicule selon la revendication 1, **caractérisé en ce que** ledit vecteur de variables N-dimensionnel comprend également au moins la température ambiante.

4. Procédé d'estimation du couple résiduel entre les éléments freinés et les éléments de freinage d'un frein de véhicule selon la revendication 1, **caractérisé en ce que** ledit vecteur de variables N-dimensionnel comprend également au moins le délai entre l'instant de l'acquisition de la température et le dernier instant où le frein a été activé.

5. Procédé d'estimation du couple résiduel entre les éléments freinés et les éléments de freinage d'un frein de véhicule selon l'une des revendications précédentes, **caractérisé en ce que** ledit élément de freinage comprend un disque de frein (10), et que ledit élément de frein comprend un bloc de matériau de friction (20) et une plaque de support arrière (40) pour ledit bloc de matériau de friction (20), et **en ce que** la température dudit élément de freinage est acquise par au moins un capteur de température (100) configuré et positionné pour détecter la température de ladite plaque de support arrière (40).

6. Procédé d'estimation du couple résiduel entre les éléments freinés et les éléments de freinage d'un frein de véhicule selon l'une des revendications précédentes, **caractérisé par** l'intégration d'une logique d'acquisition temporelle de la température dudit élément de freinage basée sur une fréquence d'échantillonnage pour au moins un intervalle de temps prédéfini.

7. Procédé d'estimation du couple résiduel entre les éléments freinés et les éléments de freinage d'un frein de véhicule selon l'une des revendications 1 à 5, **caractérisé par** l'intégration d'une logique d'acquisition temporelle de la température dudit élément de freinage basée sur un échantillonnage continu pendant au moins un intervalle de temps prédéfini à partir d'un instant d'acquisition déterminé par un événement.

8. Procédé d'estimation du couple résiduel entre les éléments freinés et les éléments de freinage d'un frein de véhicule selon l'une des revendications précédentes, **caractérisé en ce qu'**au moins une variable choisie parmi la vitesse du véhicule, la température de l'élément de freinage, la variation temporelle de la température de l'élément de freinage ou l'état de la pédale de frein est utilisée pour déterminer si ledit frein est activé au moment de l'acquisition de la valeur de température.

9. Procédé d'estimation du couple résiduel entre les éléments freinés et les éléments de freinage d'un frein de véhicule selon l'une des revendications précédentes, **caractérisé en ce que** le couple résiduel est estimé à l'aide dudit modèle de calcul N-dimensionnel et, en outre, à l'aide de la variation temporelle acquise de la température du frein.

10. Dispositif d'estimation du couple de freinage résiduel d'un frein de véhicule, comprenant :
· un élément freiné comprenant un disque de frein (10),
· un élément de freinage comprenant un bloc de matériau de friction (20) et une plaque de support arrière (40) pour ledit bloc de matériau de friction (20),
· au moins un capteur de température (100) configuré et positionné pour détecter la température de ladite plaque de support arrière (40),
· une unité de commande électronique (ECU) (200) connectée audit capteur de température (100), ladite unité de commande électronique (ECU) (200) comprenant un modèle de calcul N-dimensionnel représentant une caractérisation analytique ou expérimentale du comportement thermique du frein, ladite unité de commande électronique (ECU) (200) étant programmée pour :
· acquérir la valeur de température de ladite plaque de support arrière (40) à partir dudit capteur de température (100);
· déterminer si ledit frein est activé au moment de l'acquisition de la valeur de température;
· accepter la valeur de température si ledit frein n'est pas activé au moment de ladite acquisition;
· si la valeur de température est acceptée, calculer automatiquement une valeur de température de référence en fournissant un vecteur de variables N-dimensionnel, comprenant au moins la température acquise de ladite plaque de support arrière (40), comme entrée dudit modèle de calcul N-dimensionnel;
· estimer le couple résiduel en comparant la température acquise acceptée à la température de référence calculée.

11. Dispositif d'estimation du couple résiduel d'un frein de véhicule selon la revendication précédente, **caractérisé en ce que** ledit capteur de température (100) est un capteur de température par contact intégré dans ladite plaque de support arrière (40).

12. Dispositif d'estimation du couple résiduel d'un frein de véhicule selon la revendication 11, **caractérisé en ce que** ledit capteur de température (100) est un capteur de température sans contact.

13. Dispositif d'estimation du couple résiduel d'un frein de véhicule selon l'une des revendications 10 à 12, **caractérisé en ce que** ledit capteur de température (100) est configuré et positionné pour détecter la température de surface ou interne de ladite plaque de support arrière (40).
